# EUROPEAN PATENT APPLICATION

(11) **EP 4 715 783 A1**
(43) Date of publication of application: **25.03.2026**
(21) Application number: 25192940.2
(22) Date of filing: 30.07.2025
(51) Int. Cl.: G08G 1/0967, B60W 60/00, G08G 1/16

(54) **COMPUTER-IMPLEMENTED METHOD FOR DETERMINING A MOTION PLAN FOR DRIVING AN AUTONOMOUS AGENT IN A TRAFFIC SITUATION**

(30) Priority: 18.09.2024 DE 102024208910
(71) Applicant: AUMOVIO Autonomous Mobility Germany GmbH, 85057 Ingolstadt (DE)
(72) Inventor: Bouzidi, Mohamed-Khalil, 30175 Hannover (DE); Bernhard, Sebastian, 30175 Hannover (DE); Kast, Simon, 30175 Hannover (DE); Derajic, Bojan, 30175 Hannover (DE); Reichardt, Jörg, 30175 Hannover (DE)
(74) Representative: Aumovio Corporation

(57) **Abstract**

The invention relates to a computer-implemented method for determining a motion plan (30) for driving an autonomous agent (10) in a traffic situation (12), the agent (10) including a sensor (22) for capturing sensor data (24) in a sensor field-of-view (26), the sensor data (24) being indicative of the traffic situation (12).

## Description

### TECHNICAL FIELD

The invention relates to a computer-implemented method for determining a motion plan for driving an autonomous agent in a traffic situation. The invention further relates to a data processing device, a computer program, a computer-readable data carrier, and an autonomous agent.

### BACKGROUND

Motion planning for self-driving cars and autonomous mobile robots in environments with significantly occluded areas presents one of the key challenges in industry. Those occlusions are mainly caused by the physical limits of the sensor elements and they may reduce levels of safety and performance during motion. There are numerous practical examples in which an occlusion could significantly influence traffic situations. For example, a pedestrian could be occluded behind a building or a parked car near a crosswalk. Another example would be, when a car or a motorcycle is occluded from the perspective of the ego vehicle which is trying to overtake a truck in front of it.

One of the most popular ways to tackle this problem is the development of "occlusion-aware" motion planning algorithms. The state-of-the-art algorithms in this area use different approaches, such as:
- Reachability analysis - predicting all possible worst-case scenarios, deducing occupied space forward in time based on the predictions, and controlling the vehicle to avoid those regions [1].
- Game-theoretic approach - formulates occlusion-aware planning as a game between ego vehicle and other traffic participants which are occluded and potentially adversarial. The optimal solution is formulated as dynamic game problem and then used for motion planning of the ego vehicle [2]. However, it may lack generality since it is only designed for one traffic scenario.

- Potential field method - represents the environment with a scalar field, e.g., risk field [3] or attractive/repulsive field [4], and then the motion planning process is performed based on the gradient of that field.
- Information-theoretic approach - introduces an information-theoretic objective related to the level of occlusion in the environment. During motion planning, this objective is optimized jointly with other objectives (e.g., performance and safety objectives), which allows the vehicle to actively collect new information about occupied regions [5, 6].

Another important segment of the prior art is related to the techniques for 3D occupancy prediction, which are then used as a module of an occlusion-aware motion planning algorithm. State-of-the-art solutions for 3D occupancy prediction leverage modern AI methods which, based on sensor inputs such as cameras, provide occupancy and semantic predictions in 3D space [7, 8, 9].

There are a few possible problems associated with the techniques mentioned in the prior art:
- Too conservative handling of occlusions - this problem is mainly present in techniques that consider the worst-case scenarios, such as reachability analysis, and it may lead to over-conservative behavior of the vehicle and may degrade its performance.
- Do not combine information gathering capability with risk-aware collision avoidance of possible occluded objects- on the one hand [1-4], they may ignore information gathering capability, but are risk-aware about possible occlusions. On the other hand [5,6], they may not be risk-aware, but are trying to incorporate information-theoretic objectives during motion planning.
- Lack of generality - Some of the mentioned references are only designed for a specific traffic scenario, i.e., they may not be applicable for many other traffic scenarios.

Reference is made herein to the following literature:
[1] R. Firoozi, A. Mir, G. S. Camps, and M. Schwager, "Occlusion-Aware MPC for Guaranteed Safe Robot Navigation with Unseen Dynamic Obstacles." arXiv, Nov. 16, 2022. Accessed: Mar. 16, 2024. [Online]. Available: http://arxiv.org/abs/2211.09156;
[2] Z. Zhang and J. F. Fisac, "Safe Occlusion-aware Autonomous Driving via Game- Theoretic Active Perception," in Robotics: Science and Systems XVII, Jul. 2021. doi: 10.15607/RSS.2021.XVII.066;
[3] C. van der Ploeg, T. Nyberg, J. M. G. Sánchez, E. Silvas, and N. van de Wouw, "Overcoming the Fear of the Dark: Occlusion-Aware Model-Predictive Planning for Automated Vehicles Using Risk Fields." arXiv, Sep. 27, 2023. Accessed: Mar. 16, 2024. [Online]. Available: http://arxiv.org/abs/2309.15501;
[4] P. Lin, E. Javanmardi, J. Nakazato, and M. Tsukada, "Occlusion-Aware Path Planning for Collision Avoidance: Leveraging Potential Field Method with Responsibility-Sensitive Safety." arXiv, Jun. 12, 2023. Accessed: Mar. 16, 2024. [Online]. Available: http://arxiv.org/abs/2306.06993;
[5] B. Charrow et al., "Information-Theoretic Planning with Trajectory Optimization for Dense 3D Mapping," in Robotics: Science and Systems XI, Robotics: Science and Systems Foundation, Jul. 2015. doi: 10.15607/RSS.2015.XI.003;
[6] H. Andersen et al., "Trajectory optimization for autonomous overtaking with visibility maximization," in 2017 IEEE 20th International Conference on Intelligent Transportation Systems (ITSC), Oct. 2017, pp. 1-8. doi: 10.1109/ITSC.2017.8317853;
[7] Y. Huang, W. Zheng, Y. Zhang, J. Zhou, and J. Lu, "Tri-Perspective View for Vision-Based 3D Semantic Occupancy Prediction," 2023 IEEE/CVF Conference on Computer Vision and Pattern Recognition (CVPR), Vancouver, BC, Canada, 2023, pp. 9223-9232, doi: 10.1109/CVPR52729.2023.00890;
[8] Li, Z. et al. (2022). "BEVFormer: Learning Bird's-Eye-View Representation from Multicamera Images via Spatiotemporal Transformers." In: Avidan, S., Brostow, G., Cissé, M., Farinella, G.M., Hassner, T. (eds) Computer Vision - ECCV 2022. ECCV 2022. Lecture Notes in Computer Science, vol 13669. Springer, Cham. https://doi.org/10.1007/978-3-031-20077-9 1; and
[9] Tian, Xiaoyu and Jiang, Tao and Yun, Longfei and Mao, Yucheng and Yang, Huitong and Wang, Yue and Wang, Yilun and Zhao, Hang, "Occ3D: A Large-Scale 3D Occupancy Prediction Benchmark for Autonomous Driving", Advances in Neural Information Processing Systems, Pp 64318--64330, Curran Associates, Inc, Volume 36, 2023.

### SUMMARY OF THE INVENTION

The object of the invention is to provide an improved method for determining a motion plan for driving an autonomous agent in a traffic situation.

To achieve this object, the invention provides a computer-implemented method according to claim 1. A data processing device, a computer program, a computer-readable data carrier, and an autonomous agent are subject-matter of the parallel claims. Advantageous embodiments of the invention are subject-matter of the dependent claims.

In one aspect, the invention provides a computer-implemented method for determining a motion plan for driving an autonomous agent in a traffic situation, the agent including a sensor for capturing sensor data in a sensor field-of-view, the sensor data being indicative of the traffic situation, the method comprising:
a) Assessing the traffic situation at a current time *t*₀ by determining, based on current sensor data, a current occlusion map, the current occlusion map being indicative of one or more occluded areas in the sensor field-of-view where no related sensor data is currently available;
b) Building, based on the current occlusion map, a scenario tree, the scenario tree including a plurality of scenarios for the traffic situation in a planning horizon, and determining for each scenario a suitable motion plan for driving the agent, wherein the scenario tree is based on a decision postponing that constrains all suitable motion plans to a common motion plan up to a decision postponing time *Tₚ*, the decision postponing time *Tₚ* being calculated based on an occlusion map predicted for each scenario and indicative of a time when all of the scenarios except of one can be excluded; and
c) Re-assessing the traffic situation at a future time *t*₁ > *t*₀ until a single scenario remains and selecting the corresponding motion plan for driving the agent in the traffic situation beyond the decision postponing time *Tₚ*.

An advantage of the method may be that occlusions are considered during motion planning. The agent may be an autonomous vehicle, robot, drone, or the like. The occlusions may be considered by calculating a decision postponing time *Tₚ* based on predicted occlusions for each scenario. The agent thus follows first a common motion plan until the decision postponing time *Tₚ*, i.e., until all relevant occlusions are resolved. This may increase a level of safety during autonomous motion. Decision postponing may be regarded as passive information gathering.

Preferably, step b) further comprises:
b1) Determining the suitable motion plans by a minimization based on a cost function, the cost function including the predicted occlusion maps for each scenario, wherein the cost function preferably includes a term for maximizing an information gain about the one or more currently occluded areas.

An advantage of the method may be that the motion plans, including the common motion plan, may be determined based on a cost function that includes predicted occlusion maps. Thus, the agent may try to resolve the occlusions when it follows the common motion plan. The common motion plan may thus be determined in a manner that resolves relevant occlusions optimally. This can be regarded as active information gathering. This may mimic a human behavior: for example, in a traffic situation where the agent follows a traffic participant and tries to overtake it, the agent may first explore the area in front of the traffic participant by swerving to the middle of the road, but not yet starting a maneuver for overtaking. This may make motion planning more effective.

Preferably, step c) further comprises one or both of the following:
c1) Updating the predicted occlusion maps based on the sensor data at the future time *t*₁ > *t*₀ and adapting the decision postponing time *Tₚ* based on the updated predicted occlusion maps; and/or
c2) Excluding one or more scenarios from the scenario tree based on the sensor data at the future time *t*₁ > *t*₀*.*

An advantage of the method may be that the decision postponing time *Tₚ* may be adapted during following the common motion plan. Thus, when occlusions are resolved earlier than expected, the agent may take immediately a decision for a motion plan. This may make motion planning more effective.

Preferably, step b) further comprises one or both of the following:
b2) Building the scenario tree by including one or more worst-case scenarios, each worst-case scenario assuming one or more obstacles in at least one of the currently occluded areas; and/or
b3) Building the scenario tree by including one or more best-case scenarios, each best-case scenario assuming no obstacle in all of the currently occluded areas.

An advantage of the method may be that may consider worst-case as well as best-case scenarios. The motion planning may thus be risk aware, but not too conservative.

Preferably, step b) further comprises:
b4) Estimating a maximum possible velocity and/or acceleration of the assumed obstacle for calculating a reachable area of the assumed obstacle in at least one of the currently occluded areas.

An advantage of the method may be that for worst-case scenarios, the method may consider a maximum possible velocity and/or acceleration. The motion planning may thus be risk aware, but not too conservative.

Preferably, step b) further comprises:
b5) Predicting the occlusion map for each scenario by mapping, for each motion plan, a position and/or orientation of the agent to the one or more currently occluded areas.

Preferably, step a) further comprises:
a1) Based on the current sensor data, determining a current occupancy map indicative of one or more areas in the sensor field of-view that are occupied; and
a2) Based on the current occupancy map, determining the current occlusion map.

Preferably, step a2) further comprises:
a2a) Determining the current occlusion map by extending a straight line from the sensor beyond the one or more occupied areas up to a maximum sensor detection distance of the sensor.

Preferably, step a) further comprises:
a3) Filtering and/or sorting the current occlusion map by ranking the one or more currently occluded areas according to a relevance score for assessing the traffic situation.

An advantage of the method may be that occlusions are filtered by relevance. For example, occlusions that are far away from the agent or the road, may be less relevant. This may make motion planning more effective.

Preferably, step a3) further comprises:
a3a) Determining the relevance score based on a navigation map, a distance from the agent to the one or more currently occluded areas, a reachable area of one or more assumed obstacles, and/or a nature of one or more occupied areas in the sensor field-of-view.

An advantage of the method may be that it may consider the nature of the occupied area. For example, if an area is not occupied by a vehicle, pedestrian, bicycle, the occupied area may be less relevant than other. This may make motion planning more effective.

Preferably, the method further comprises:
d) Generating a control signal for driving the agent based on the common motion plan and/or selected motion plan.

In another aspect, the invention provides a data processing device comprising means for carrying out the method of any of the preceding embodiments.

Any feature, aspect, and/or advantage that is described herein with respect to embodiments of the data processing device may optionally apply to embodiments of the method, and vice versa.

In another aspect, the invention provides a computer program comprising instructions which, when the program is executed by a computer, cause the computer to carry out the method of any of the preceding embodiments.

Any feature, aspect, and/or advantage that is described herein with respect to embodiments of the computer program may optionally apply to embodiments of the method and/or the data processing device, and vice versa.

In another aspect, the invention provides a computer-readable data carrier having stored thereon the computer program.

Any feature, aspect, and/or advantage that is described herein with respect to embodiments of computer-readable data carrier may optionally apply to embodiments of the method, the data processing device, and/or the computer program, and vice versa.

In another aspect, the invention provides an autonomous agent including a sensor for capturing sensor data in a sensor field-of-view, the sensor data being indicative of a traffic situation, the agent further including a data processing device according to any of the preceding embodiments.

Any feature, aspect, and/or advantage that is described herein with respect to embodiments of the autonomous agent may optionally apply to embodiments of the method, the data processing device, the computer program, and/or the computer-readable data carrier, and vice versa.

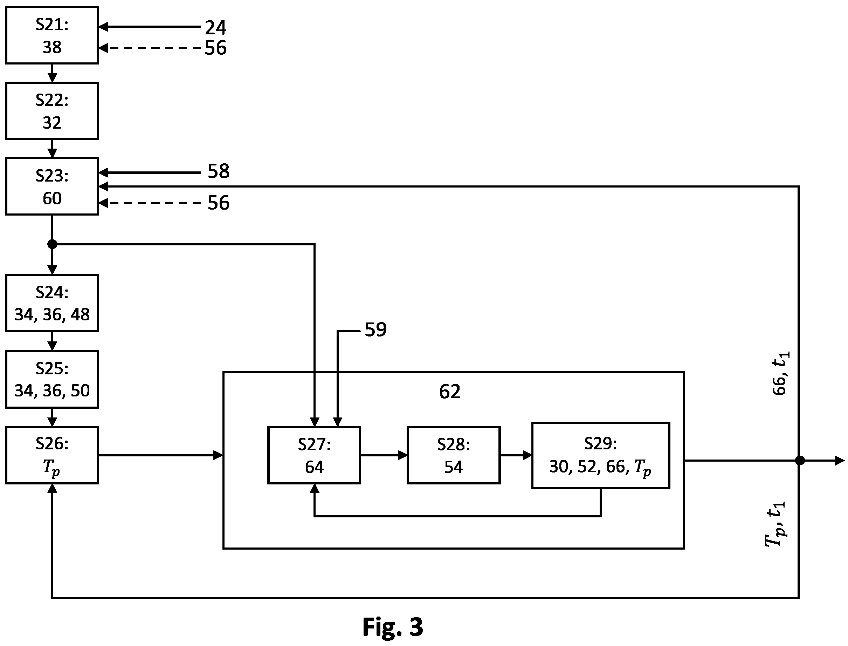

Preferred embodiments of the invention may be summarized as follows:
Based on a retrieved map of occluded space, possibly occluded objects, their relevance, and their future trajectories are evaluated. Using the information of the occluded space and possibly occluded objects, a planning algorithm chooses the optimal next action for the ego vehicle to minimize risk from possibly occluded objects and to maximize information gain, i.e., minimize the relevant occluded space in the future. An embodiment of the solution is illustrated in Fig. 3 and is comprised of the following steps:
1. Construct occupancy grid map:
   We utilize an existing approach such as [7], [8] or [9] to obtain a 3D occupancy grid map (3D-OGM) or a 2D occupancy grid map (2D-OGM, so called "birds-eye view"), respectively, from the current sensor's measurements and, optionally, the measurement history. Given a resolution of 3D or 2D space, the 3D-OGM and 2D-OGM contains the information which cell of the space is occupied. Additional information such as from segmentation and classification can be used to annotate the occupied cells with a class (e.g. vehicle, pedestrian, road, sidewalk, etc.).
2. Add occlusion information:
   Based on the sensor configuration of the ego vehicle, we define a respective sensor model for each sensor (e.g., lidar, camera, radar) to obtain occlusion information like in [3]. Based on each sensor model, we obtain a field-of-view (FOV) with a resolution (discretization), a sensor detection distance and center of the sensor. For each cell of the discretized FOV, a 3D ray with its length equal to the sensor detection distance starting at the sensor's center is aligned with the cell (e.g., for a pinhole camera model, the center of the camera's coordinate system, the camera's focal length, and each pixel of the camera's image define how the ray must be aligned). Together with the 3D-OGM or, after projecting the ray to the 2D plane, with the 2D-OGM for each ray the intersected cells of the OGM can be retrieved.

Starting from the sensor's center, each cell is marked as visible until either the first occupied cell is reached, or the end of ray is reached. After evaluating each sensor as above, the result of this step is a 3D-OGM or 2D-OGM including occlusion information where any non-occupied cell that is not marked visible is occluded.
3. Assess situation (scenario, relevance of occluded area):
   Based on the 3D-OGM or 2D-OGM including occlusion information and infrastructure information from an SD-map (providing information on lanes, crossings, etc.), the occluded area is filtered for relevance. For this step, all occluded cells are filtered for relevance by projecting each occluded cell on the SD-map and only keep it if is projected to areas (such as road, sidewalk, crossings, etc.) that are relevant for the planning phase. Furthermore, the previously planned optimal trajectory for the ego-vehicle is considered to filter the remaining occluded cells by a distance metric, i.e., occluded cells that are too far away are discarded. Additionally, information such as annotations in the 3D-OGM or 2D-OGM map or classification and segmentation of sensor data can be used to detect traffic situations and areas (scenarios) that bear a higher risk. To account for this, a relevance score is added for each occluded cell where each occluded cell assigned to scenarios with higher risk have a higher relevance. E.g., the relevance score is increased for occluded cells in or close to areas with detected high activities (e.g., a lot of pedestrians are detected on the sidewalk) or that are occluded by certain objects such as double-parked cars blocking the opposite lane.
4. Calculate forward reachable set of worst-case occluded obstacles:
   The outputted 3D Map is then used for calculating the possible future position of the potential occluded objects. For that, we can either use the worst-case scenario by calculating the forward reachable set (simplifying the physics using the point mass model), where we restrict the maximum possible velocity and acceleration of the occluded object by the most likely object type extracted from the situation assessment (pedestrian or vehicle). This set can be added as one contingency scenario in the scenario tree of the Branch Model predictive Control (MPC). The Branch MPC (see point 7) can then plan with all scenarios added to the scenario tree, i.e., for example, one contingency scenario and one scenario where the possibly occluded object is neglected.
5. Adaptive Decision Postponing:
   To calculate the appropriate decision postponing time, we use the predicted occlusion state (more details see point 7) calculated by the Branch MPC in the last timestep. Hence, we check every timestep in the planning horizon at which timestep there are enough information available (i.e., the occlusion is small enough) to conclude whether there is an object or not. That means, this block outputs the timestep in which it is expected that the autonomous vehicle can take an informed decision
6. Information gathering cost function:
   The cost function can be defined like in [5],[6]. We include the goal to minimize the occluded space next to the cost function terms to maximize progress on reference path, minimize deviation from path, maximize distance to obstacle, and minimize lateral and longitudinal jerk and acceleration for comfortable driving. If we have more than one relevant occluded spaces, we weight the occlusions based on the relevance extracted from point 3. To minimize the occluded space, we add a term in the cost function to maximize the information gain between two timestep (the difference between the occlusion of two timesteps)
7. Branch Model Predictive Control:
   The Branch MPC is configured using the decision postponing time from point 5 and the information gathering cost function from point 6. The model used for the Branch MPC can be simply the kinematic bicycle model, but extended with the state of the occlusion. The state of the occlusion is calculated utilizing the occlusion data acquired in point 2, along with the identified relevant occlusions from point 3. We establish a function that maps the present position and orientation of the autonomous system to the occluded areas of each selected occlusion. In essence, this involves formulating a geometric equation that calculates the field-of-view (FOV), returning the occluded space relative to the autonomous system's input pose. This state of occlusion is also used to formulate the information gathering cost function.

The Branch MPC plans with all scenarios added to the scenario tree in point 4 minimizing the information gathering cost function and satisfying the constraints at the same time. This is done by the Branch MPC by allowing different strategies (i.e., control inputs) which are constrained to be identical in the first timesteps, i.e., until the calculated time of decision postponing is reached, i.e., until it is clear which strategy to take.

Embodiments of the invention preferably have the following advantages and effects:
- Reducing the conservatism of the autonomous system by still accounting for the risk through:
   - Information gathering by still accounting for the collision risk with occluded objects;
   - Configuring the decision postponing based on future states of the occlusion gives our planner the awareness when we will have enough information to decide which action to take;
   - Allowing the planner to plan for different strategies which the autonomous vehicle can adapt to depending on which scenarios occur.
- Enhancing human-like behavior of autonomous system which is automatically adapted (without being hardcoded) such as:
   - Nudging for information gain (maximizing the field-of-view);
   - Waiting for more information in future by slowing down approaching conflict zones (e.g., occluded intersections).
- This approach may be universally applicable to different traffic scenarios with occlusions. It is not only designed for a certain traffic scenario (not only for intersections or blocked view due to a big truck, etc.), i.e., does not need to be reconfigured for different traffic scenarios such as [2,5].
- The architecture can be simply extended for handling other uncertain scenarios in motion planning (not only for occluded object). In example, you can add more branches to handle multimodal predictions about the behavior of detected traffic participants
- Embodiments of the invention may further be applied to motion planning in robotics, drones, etc.

### BRIEF DESCRIPTION OF THE DRAWINGS

Embodiments of the invention are now explained in more detail with reference to the accompanying drawings of which
Fig. 1 shows an autonomous agent in an exemplary traffic situation;
Fig. 2 shows a first embodiment of a computer-implemented method for determining a motion plan for driving the agent in the traffic situation; and
Fig. 3 shows a second embodiment of the computer-implemented method.

### DETAILED DESCRIPTION OF THE DRAWINGS

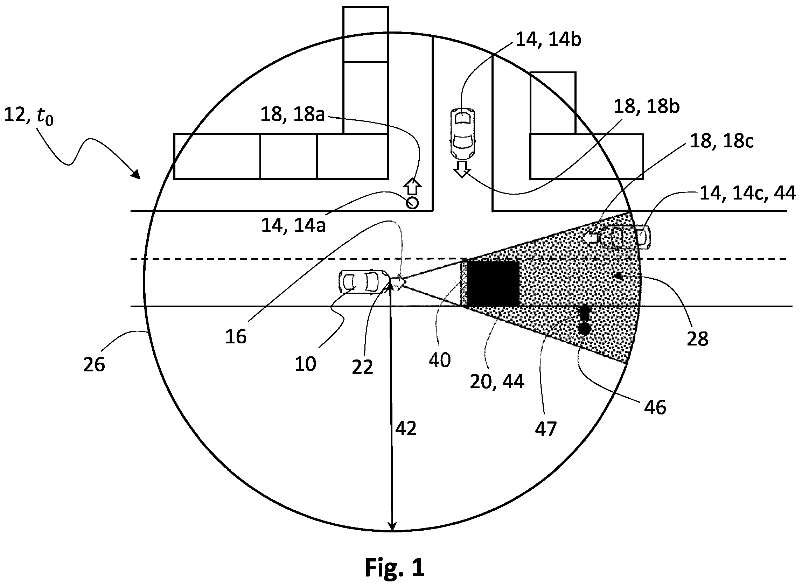

Fig. 1 shows an autonomous agent 10 in an exemplary traffic situation 12 at a time *t*₀*.*

The exemplary traffic situation 12 includes three traffic participants 14, a first traffic participant 14a in nature of a moving pedestrian, a second traffic participant 14b in nature of a moving vehicle, and a third traffic participant 14c in nature of another moving vehicle. The agent 10 travels in an agent travel direction 16. The third traffic participant 14c travels in a direction 18, 18c that is opposite to the agent travel direction 16. The third traffic participant 14c may be regarded as an obstacle 44.

The exemplary traffic situation 12 further includes a static object 20 as obstacle 44 that is in agent travel direction 16 in front of the agent 10. The static object 20 is located between the agent 10 and the third traffic participant 14c.

For autonomous motion, driving, or steering, the agent 10 includes a sensor 22 for capturing sensor data 24 in a sensor field-of-view 26. For example, the sensor 22 may be a radar device, a lidar device, and/or a camera device. The sensor data 24 may include data related to positions, distances, velocities, accelerations, trajectories, and/or the nature of objects 20 and/or traffic participants 14 within the sensor field-of-view 26. For identifying the nature of objects 20 and/or traffic participants 14, a machine learning algorithm, e.g., a neural network, may be used that is trained for classification and/or segmentation of traffic situation scenes.

The static object 20 occludes an area 28 in the sensor field-of-view 26 where the sensor 22 is not able to capture related sensor data 24. The third traffic participant 14c is located within said occluded area 28 and out of the sensor field-of-view 26. In other words, due to the static object 20, the agent 10 is not able to capture the third traffic participant 14c by means of the sensor 22 and no sensor data 24 related to the third traffic participant 14c is currently available.

An idea of embodiments of the invention is to determine a motion plan 30 for driving the agent 10 in the traffic situation 12, wherein the motion plan 30 is based on the occlude area 28.

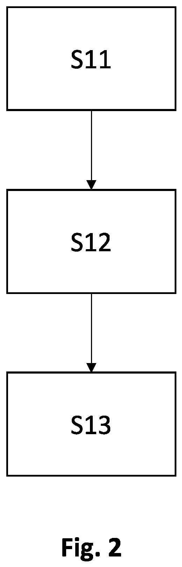

Fig. 2 shows a first embodiment of a computer-implemented method for determining the motion plan 30 for driving the agent 10 in the traffic situation 12.

In a step S11, the first embodiment includes:
- Assessing the traffic situation 12 at the current time *t*₀ by determining, based on the current sensor data 24, a current occlusion map 32, the current occlusion map 32 being indicative of one or more occluded areas 28 in the sensor field-of-view 26 where no related sensor data 24 is currently available.

In a step S12, the first embodiment includes:
- Building, based on the current occlusion map 32, a scenario tree 34, the scenario tree 34 including a plurality of scenarios 36 for the traffic situation 12 in a planning horizon, and determining for each scenario 36 a suitable motion plan 30 for driving the agent 10, wherein the scenario tree 34 is based on a decision postponing that constrains all suitable motion plans 30 to a common motion plan up to a decision postponing time *Tₚ*, the decision postponing time *Tₚ* being calculated based on an occlusion map 32 predicted for each scenario 34 and indicative of a time when all of the scenarios 36 except of one can be excluded.

In a step S13, the first embodiment includes:
- Re-assessing the traffic situation 12 at a future time *t*₁ > *t*₀ until a single scenario 36 remains and selecting the corresponding motion plan 30 for driving the agent 10 in the traffic situation 12 beyond the decision postponing time *Tₚ*.

Reference is made again to Fig. 1:
In step S11, the method may determine all areas 28 within the sensor field-of-view 26 that are occluded and where no related sensor data 24 is available at time *t*₀*.* The method may first determine a current occupancy map 38 that is indicative of an area 40 in the sensor field of view 26 that is occupied. The current occlusion map 32 may then be determined by extending a straight line from the sensor 22 beyond the occupied area 40 up to a maximum sensor detection distance 42 of the sensor 22. The area 28 beyond the occupied area 40 may then be marked as occluded. The occlusion map 32 may thus be determined based on the occupancy map 38.

In step S11, the method may further filter and/or sort the occluded areas 28 according to a relevance score. For example, the occluded area 28 in the agent travel direction 16 may be more relevant than an occluded area 28 in another direction. The method may, for example, further compare the occluded area 28 with a navigation map 58 that may indicate that the occluded area 28 is located on a roadway or not. The relevance score may further be based on a distance from the agent 10 to the occluded area 28 and/or the nature of the occupied area 40 in the sensor field-of-view 26.

In step S12, the method builds, based on the current occlusion map 32, a scenario tree 34 including one or more scenarios 36. In this step, the method may include one or more worst-case scenarios 48, each worst-case scenario 48 assuming one or more obstacles 44 in the occluded area 28. For example, one worst-case scenario 48 may assume the third traffic participant 14c as obstacle 44 in the occluded area 28. Another worst-case scenario 48 may assume a non-existent obstacle 46 in the occluded area 28. Another worst-case scenario 48 may assume both, the third traffic participant 14c and the non-existent obstacle 46 in the occluded area 28.

In step S12, the method may further estimate, for each assumed obstacle 44, a maximum possible velocity and/or acceleration, and/or a trajectory, for calculating a reachable area of the assumed obstacle 44 in the occluded area 28. For example, when the method assumes the third traffic participants 14c as vehicle, the method may assume a maximum possible velocity of 70 km/h. When the method assumes the non-existent obstacle 46 as pedestrian, the method may assume a maximum possible velocity of 10 km/h. The reachable area of the assumed obstacle 44 may also be considered in the relevance score.

In step S12, the method may further include one or more best-case scenarios 50, each best-case scenario 50 assuming no obstacle 44 in the occluded area 28. In step S12, the method further determine for each scenario 36 a suitable motion plan 30. In this step, the scenario tree 34 is based on a decision postponing that constrains all suitable motion plans 30 to a common motion plan up to the decision postponing time *Tₚ*. In other words, the suitable motion plans 30 match each other until the decision postponing time *Tₚ*.

The decision postponing time *Tₚ* is calculated based on a predicted occlusion map 52 for each scenario 36. For example, in one scenario 36 the method may assume the third traffic participant 14c as obstacle 44 in the occluded area 28, that means a vehicle with a velocity of, for example, of 25 km/h. The method may thus predict a time when the third traffic participant 14c appears out of the occluded area 28. When the third traffic participant 14c appears out of the occluded area 28, the best-case scenario 50 assuming no obstacle 44 in the occluded area 28, may be excluded.

For each motion plan 30, the predicted occlusion map 52 may further be based on a mapping of a position and/or orientation of the agent 10 to the currently occluded area 28. In other words, the motion of the agent 10 according to each motion plan 30, may be considered when calculating the decision postponing time *Tₚ*.

In step S12, the suitable motion plans 30 may be determined by a minimization based on a cost function 54 that includes the predicted occlusion map 52 for each scenario 36. For example, the cost function 54 may be a sum over single-scenario cost functions, each single-scenario cost function respectively being related to a single scenario 36. The cost function 54 may include a term for maximizing an information gain about the currently occluded area 28.

In step S13, the method includes the re-assessing of the traffic situation 12 at the future time *t*₁ *> t*₀*.* In step S13, the method may update the occlusion maps 52 that have been predicted at time *t*₀, based on the sensor data 24 at the future time *t*₁ *> t*₀*.* The updated predicted occlusion maps 52 may then be used to adapt the decision postponing time *Tₚ*. In step S13, one or more scenarios 36 may further be excluded from the scenario tree 34 based on the sensor data 24 at the future time *t*₁ *> t*₀*.*

By re-assessing at the future time *t*₁ *> t*₀ or any further re-assessing at a time *t*₂ > *t*₁*, t*₃ > *t*₂*,* etc. more and more scenarios 36 may be excluded from the scenario tree 34 until a single scenario 36 remains. The corresponding motion plan 30 for this remaining scenario 36 is finally selected for driving the agent 10 in the traffic situation 12 beyond the (adapted) decision postponing time *Tₚ*.

Fig. 3 shows a second embodiment of the computer-implemented method.

In a step S21, the second embodiment includes:
- Constructing the current occupancy map 38 based on the current sensor data 24.

In step S21, the occupancy map 38 preferably is three-dimensional, but the invention is not limited to that. In the occupancy map 38, the sensor field-of-view 26 may be partitioned into a plurality of cells. The occupancy map 38 may then contain, for each cell, information about whether the cell is occupied or not. Additionally, the occupancy map 38 may contain input 56 about the nature of the occupancy, i.e., how the cell is occupied, e.g., whether the cell is occupied by a building, vehicle, pedestrian, road, and/or sidewalk. The input 56 may be determined based on a machine learning algorithm, such as a neural network, that that may be trained for annotation, for instance classification and/or segmentation, of traffic situation scenes.

The occupancy map 38 is constructed based on the current sensor data 24 at time *t*₀*.* Optionally, the occupancy map 38 may further be constructed based on sensor data 24 from one or more previous times t < *t*₀*.*

In a step S22, the second embodiment includes:
- Determining the current occlusion map 32 based on the current occupancy map 38.

In step S22, a sensor model 59 including the maximum sensor detection distance 42 may be constructed. For each cell of the occupancy map 38, a three-dimensional ray with a length equal to the maximum sensor detection distance 42 may be aligned starting at a center of the sensor 22. Starting from the center of the sensor 22, each cell may be marked as visible until either the first occupied cell is reached, or the end of ray is reached. After evaluating each sensor 22 as above, the result of this step S22 may be a three-dimensional occlusion map 32 including occlusion information where any non-occupied cell that is not marked visible is occluded. Alternatively, the occlusion map 32 may be two-dimensional.

In a step S23, the second embodiment includes:
- Filtering and/or sorting the current occlusion map 32 by relevance.

In step S23, the current occlusion map 32 may be filtered and/or sorted by ranking the one or more currently occluded areas 28 by a relevance score. The relevance score may be based on the navigation map 58. The navigation map 58 may be, for example, a standard-definition (SD) map. All occluded areas 28 may be filtered for relevance by projecting each occluded cell on the SD-map and only keep the cell, if it is projected to areas (such as road, sidewalk, crossings, etc.) that may be relevant for the planning phase. Additionally, information such as the input 56 on annotation (segmentation and/or classification) in the occupancy map 38 and/or the occlusion map 32 may be used to detect scenarios 36 and occluded areas 28 that bear a higher risk. The output of step S23 may be an assessed occlusion map 60 including one or more occluded areas 28 that are filtered and/or sorted by relevance.

In a step S24, the second embodiment includes:
- Including one or more worst-case scenarios 48 to the scenario tree 34.

In step S24, the assessed occlusion map 60 may be used for calculating possible future positions of the assumed or potential occluded obstacles 44 or objects 20. The worst-case scenarios 48 may be included by calculating a forward reachable set where a maximum possible velocity and/or acceleration of the assumed or potential occluded obstacle 44 may be restricted by the most likely object type (nature) extracted from the situation assessment (pedestrian or vehicle). This set may be added as one contingency scenario in the scenario tree 34.

In a step S25, the second embodiment includes:
- Including one or more best-case scenarios 50 to the scenario tree 34.

In a step S26, the second embodiment includes:
- Calculating the decision postponing time *Tₚ*.

To calculate the appropriate decision postponing time *Tₚ* in step S26, the predicted occlusion map 52 for each scenario 36 may be used. The predicted occlusion maps 52 may be determined by an output of a prediction module 62 from the one or more previous times t < *t*₀*.*

The second embodiments further includes steps S27, S28, and S29 that are performed by the prediction module 62 at time *t*₀*.* The assessed occlusion map 60, the one or more worst-case scenarios 48, the one or more best-case scenarios 50, and the decision postponing time *Tₚ* are fed into the prediction module 62.

In step S27, the method may determine an occlusion state 64 by extending a kinematic bicycle model with the assessed occlusion map 60. In this step, a function may be derived that maps the present position and/or orientation of the agent 10 to the occluded areas 28. In essence, this may involve formulating a geometric equation that may calculate the sensor field-of-view 26 and returns the occluded space relative to a position and/or orientation of the agent 10. For this, the kinematic bicycle model may use the sensor model 59.

In step S28, the occlusion state 64 may be used to formulate the cost function 54 for information gathering. The prediction module 62 may plan with all scenarios 36, 48, 50 added to the scenario tree 34, for instance in steps S24 and S25. The prediction module 62 may minimize the cost function 54 for information gathering by satisfying the constraint to the decision postponing time *Tₚ* and the common motion plan. This may be done by the prediction module 62 by allowing different strategies (i.e., control inputs) which are constrained to be identical in the first timesteps, i.e., until the calculated time of decision postponing *Tₚ* is reached.

In step S29, the prediction module 62 iterates for predicting the occlusion maps 52 for each scenario 36. The output of step S29 may be the suitable motion plan 30 for each scenario 36 including a current optimal trajectory 66 according to the common motion plan. Furthermore, the predicted occlusion map 52 for each scenario 36 from the previous time t < *t*₀ may be updated based on the current sensor data 24, and the decision postponing time *Tₚ* from the previous time *t < t*₀ may be adapted based on the updated predicted occlusion maps 52.

The current optimal trajectory 66 may be fed back to step S23 as previously planned optimal trajectory for the agent 10 for filtering the remaining occluded cells by a distance metric, i.e., occluded cells that are too far away may be discarded. The adapted decision postponing time *Tₚ* may be fed back to step S26.

The method may then be repeated at the future time *t*₁ > *t*₀ until the (adapted) decision postponing time *Tₚ* and a decision over a suitable motion plan 30 for driving the agent 10 beyond the (adapted) decision postponing time *Tₚ* may be taken, i.e., a single scenario 36 remains.

Embodiments of the invention may further include a generating of a control signal for driving the agent 10 based on the selected motion plan 30 (including the common motion plan). Embodiments of the invention further comprise a data processing device or a controlling device (not shown) comprising means or adapted for carrying out embodiments of the described methods. Embodiments of the invention may be implemented in a computer program (not shown) comprising instructions which, when the program is executed by a computer or a controlling means, cause the computer to carry out the embodiments of the described methods. The computer program may be stored on a computer-readable data carrier (not shown). Embodiments of the invention further include the agent 10 including the data processing device or the controlling device.

In summary, embodiments of the invention relate to an occlusion-aware scenario-based motion planning coupling risk-awareness and information gathering.

### REFERENCE SIGNS

10 autonomous agent
12 traffic situation
14 traffic participant
14a first traffic participant
14b second traffic participant
14c third traffic participant
16 agent travel direction
18 travel direction of traffic participant
18a travel direction of first traffic participant
18b travel direction of second traffic participant
18c travel direction of third traffic participant
20 static object
22 sensor
24 sensor data
26 sensor field-of-view
28 occluded area
30 motion plan
32 occlusion map
34 scenario tree
36 scenario
38 occupancy map
40 occupied area
42 maximum sensor detection distance
44 obstacle
46 non-existent obstacle (pedestrian)
47 travel direction of non-existent obstacle
48 worst-case scenario
50 best-case scenario
52 predicted occlusion map
54 cost function
56 input
58 navigation map
59 sensor model
60 assessed occlusion map
62 prediction module
64 occlusion state
66 optimal trajectory
*t*₀ current time
*t*₁ future time
*Tₚ* decision postponing time

## Claims

1. A computer-implemented method for determining a motion plan (30) for driving an autonomous agent (10) in a traffic situation (12), the agent (10) including a sensor (22) for capturing sensor data (24) in a sensor field-of-view (26), the sensor data (24) being indicative of the traffic situation (12), the method comprising:
a) Assessing the traffic situation (12) at a current time *t*₀ by determining, based on current sensor data (24), a current occlusion map (32), the current occlusion map (32) being indicative of one or more occluded areas (28) in the sensor field-of-view (26) where no related sensor data (24) is currently available;
b) Building, based on the current occlusion map (32), a scenario tree (34), the scenario tree including a plurality of scenarios (36) for the traffic situation (12) in a planning horizon, and determining for each scenario (36) a suitable motion plan (30) for driving the agent (10), wherein the scenario tree (34) is based on a decision postponing that constrains all suitable motion plans (30) to a common motion plan up to a decision postponing time *Tₚ*, the decision postponing time *Tₚ* being calculated based on an occlusion map (52) predicted for each scenario (36) and indicative of a time when all of the scenarios (36) except of one can be excluded; and
c) Re-assessing the traffic situation (12) at a future time *t*₁ > *t*₀ until a single scenario (36) remains and selecting the corresponding motion plan (30) for driving the agent (10) in the traffic situation (12) beyond the decision postponing time *Tₚ*.

2. The method according to claim 1, **characterized in that** step b) further comprises:
b1) Determining the suitable motion plans (30) by a minimization based on a cost function (54), the cost function (54) including the predicted occlusion maps (52) for each scenario (36), wherein the cost function (54) preferably includes a term for maximizing an information gain about the one or more currently occluded areas (28).

3. The method according to any of the preceding claims, **characterized in that** step c) further comprises one or both of the following:
c1) Updating the predicted occlusion maps (52) based on the sensor data (24) at the future time *t*₁ > *t*₀ and adapting the decision postponing time *Tₚ* based on the updated predicted occlusion maps (52); and/or
c2) Excluding one or more scenarios (36) from the scenario tree (34) based on the sensor data (24) at the future time *t*₁ > *t*₀*.*

4. The method according to any of the preceding claims, **characterized in that** step b) further comprises one or both of the following:
b2) Building the scenario tree (34) by including one or more worst-case scenarios (48), each worst-case scenario (48) assuming one or more obstacles (44) in at least one of the currently occluded areas (28); and/or
b3) Building the scenario tree (34) by including one or more best-case scenarios (50), each best-case scenario (50) assuming no obstacle (44) in all of the currently occluded areas (28).

5. The method according to any of the preceding claims, **characterized in that** step b) further comprises:
b4) Estimating a maximum possible velocity and/or acceleration of the assumed obstacle (44) for calculating a reachable area of the assumed obstacle (44) in at least one of the currently occluded areas (28).

6. The method according to any of the preceding claims, **characterized in that** step b) further comprises:
b5) Predicting the occlusion map (52) for each scenario (36) by mapping, for each motion plan (30), a position and/or orientation of the agent (10) to the one or more currently occluded areas (28).

7. The method according to any of the preceding claims, **characterized in that** step a) further comprises:
a1) Based on the current sensor data (24), determining a current occupancy map (38) indicative of one or more areas (40) in the sensor field of-view (26) that are occupied; and
a2) Based on the current occupancy map (38), determining the current occlusion map (32).

8. The method according to claim 7, **characterized in that** step a2) further comprises:
a2a) Determining the current occlusion map (32) by extending a straight line from the sensor (22) beyond the one or more occupied areas (40) up to a maximum sensor detection distance (42) of the sensor (22).

9. The method according to any of the preceding claims, **characterized in that** step a) further comprises:
a3) Filtering and/or sorting the current occlusion map (32) by ranking the one or more currently occluded areas (28) according to a relevance score for assessing the traffic situation (12).

10. The method according to claim 9, **characterized in that** step a3) further comprises:
a3a) Determining the relevance score based on a navigation map (59), a distance from the agent (10) to the one or more currently occluded areas (28), a reachable area of one or more assumed obstacles (44), and/or a nature of one or more occupied areas (40) in the sensor field-of-view (26).

11. The method according to any of the preceding claims, further comprising:
d) Generating a control signal for driving the agent (10) based on the common motion plan and/or the selected motion plan (30).

12. A data processing device comprising means for carrying out the method of any of the preceding claims.

13. A computer program comprising instructions which, when the program is executed by a computer, cause the computer to carry out the method of any of the claims 1 to 11.

14. A computer-readable data carrier having stored thereon the computer program of claim 13.

15. An autonomous agent (10) including a sensor (22) for capturing sensor data (24) in a sensor field-of-view (26), the sensor data (24) being indicative of a traffic situation (12), the agent (10) further including a data processing device according to claim 12.
